# EUROPÄISCHE PATENTSCHRIFT

(11) **EP 3 814 795 B1**
(45) Veröffentlichungstag und Bekanntmachung des Hinweises auf die Patenterteilung: **11.06.2025**
(21) Anmeldenummer: 19722033.8
(22) Anmeldetag: 27.04.2019
(51) Int. Cl.: G01S 13/931, G01S 7/41, G01S 13/72

(54) **VERFAHREN ZUR ERKENNUNG STATISCHER RADARZIELE MIT EINEM RADARSENSOR FÜR KRAFTFAHRZEUGE**
METHOD FOR IDENTIFYING STATIC RADAR TARGETS USING A RADAR SENSOR FOR MOTOR VEHICLES
PROCÉDÉ SERVANT À IDENTIFIER DES CIBLES RADAR STATIQUES À L'AIDE D'UN CAPTEUR RADAR POUR DES VÉHICULES AUTOMOBILES

(30) Priorität: 30.06.2018 DE 102018210814
(43) Veröffentlichungstag der Anmeldung: 05.05.2021
(73) Patentinhaber: Robert Bosch GmbH, 70442 Stuttgart (DE)
(72) Erfinder: LANG, Stefan, 71726 Benningen (DE); GUSSNER, Thomas, 71634 Ludwigsburg (DE)
(86) Internationale Anmeldenummer: PCT/EP2019/060835
(87) Internationale Veröffentlichungsnummer: WO 2020/001828

(56) Entgegenhaltungen:
- WO-A1-2010/127650
- DE-A1- 102014 221 144
- US-A1- 2017 269 201

## Beschreibung

Die Erfindung betrifft ein Verfahren zur Erkennung und Klassifizierung von statischen Radarzielen mittels eines Radarsensors eines Kraftfahrzeugs, umfassend: Erkennen eines Objekts als statisches Radarziel anhand der von dem Objekt reflektierten, empfangenen Radarsignale.

### Stand der Technik

In Fahrerassistenzsystemen für Kraftfahrzeuge, beispielsweise in Systemen zur automatischen Abstandsregelung oder in Kollisionswarnsystemen, werden häufig Radarsensoren zur Erfassung des Verkehrsumfelds eingesetzt. Die Fahrerassistenzsysteme müssen neben dynamischen Objekten auch statische Objekte als potentiell kollisionsgefährdende Hindernisse verlässlich detektieren. Jedoch können in einer einzelnen Radarmessung tatsächliche statische Hindernisse und überfahrbare Objekte, wie z.B. Gullideckel, leeren Chips-Tüten oder Coladosen, nicht voneinander unterscheidbar sein. Bisher ist es üblich, zur Klassifizierung von Objekten als tatsächliche statische Hindernisse oder als überfahrbare Objekte die Radarsignatur eines statischen Objekts über die Zeit zu betrachten und zu klassifizieren. Die Objekte werden dabei als punktförmig betrachtet.

WO 2010/127650 A1 beschreibt ein Verfahren zur Auswertung von Sensordaten eines Umgebungserfassungssystems für ein Kraftfahrzeug. Detektionspunkte werden in ein zweidimensionales Belegungsgitter eingetragen, wobei der Zustand einer Gitterzelle belegt und daher "potentiell nicht überfahrbar" ist, und sonst unbelegt und damit "überfahrbar" ist und das Belegungsgitter im Wesentlichen ein Fahrzeugumfeld repräsentiert.

US 2017/0269201 A1 beschreibt ein Schätzen einer Umgebung aus Beobachtungsdaten.

DE 102014221144 A1 beschreibt eine Zielerfassungsvorrichtung für ein Fahrzeug.

In letzter Zeit besteht zunehmendes Interesse an Radarsensoren, die für ein Objekt deutlich mehr Radarreflexe mit einer höheren Genauigkeit detektieren können.

Aufgabe der Erfindung ist es, ein Verfahren für einen Radarsensor anzugeben, das es erlaubt, statische Hindernisse zuverlässiger zu erkennen.

Diese Aufgabe wird erfindungsgemäß mit den in den unabhängigen Ansprüchen angegebenen Merkmalen gelöst.

Der Lösungsgedanke besteht im Kern darin, dass für ein statisches Radarziel, das über die Zeit verfolgt und anhand von Radarsignaturen der dem Radarziel zugeordneten Radarreflexen klassifiziert wird, zusätzlich ein Belegungsmuster in ein Belegungsgitter eingetragen wird, wobei die Zuordnung des Belegungsmusters zu dem Radarziel gespeichert wird. Dabei wird einem Radarziel ein Belegungsmuster zugeordnet, welches einem oder mehreren dem Radarziel zugeordneten Radarreflexen entspricht. Es erfolgt also eine Verknüpfung des Belegungsmusters mit der Klassifikation des Radarziels aufgrund von Radarsignaturen der Radarreflexe.

Das Belegungsmuster kann für jeweilige Gitterpositionen (Gitterzellen) eine Belegungswahrscheinlichkeit angeben. Das Belegungsgitter wird gespeichert und über die Zeit aktualisiert. Über die Zeit können die Radarreflexe in dem Belegungsmuster akkumuliert werden. Die Ausdehnung des Belegungsmusters ermöglicht eine Schätzung der Ausdehnung eines statischen Hindernisses. Wenn ein Radarziel als überfahrbar klassifiziert wird, kann das Belegungsmuster aus dem Belegungsgitter entfernt werden, entsprechend einem Setzen der Belegungswahrscheinlichkeit auf einen Wert, der "nicht belegt" angibt. Analog kann bei losgefahrenen Fahrzeugen vorgegangen werden. Das Verfahren kann ein herkömmliches Verfahren zur Klassifizierung von Punktzielen und Detektion von tatsächlichen Hindernissen ergänzen.

Besonders vorteilhaft ist, dass es durch die Zuordnung eines Belegungsmusters zu einem Objekt ermöglicht wird, für in einem Belegungsgitter eingetragene Belegungswahrscheinlichkeiten nachträglich eine Klassifizierung des zugrunde liegenden Objekts vorzunehmen und die Informationen über die Belegungswahrscheinlichkeiten im Belegungsgitter und über die Klassifizierung miteinander zu verknüpfen, etwa im Verlauf einer Annäherung an das entsprechende Objekt.

Im Verlauf einer Annäherung an ein Objekt kann sich eine Vielzahl von dem Objekt zugeordneten Radarreflexen ergeben, beispielsweise in der Größenordnung von 100 oder mehr Reflexen. Die Zuordnung eines Belegungsmusters zu einem Objekt kann, auch bei einer Vielzahl von dem Objekt zugeordneten Radarreflexen, eine leichte Auswertung des Belegungsmusters zur Schätzung einer Position des Objekts und/oder zur Schätzung einer Objektgröße ermöglichen.

Weiter kann die Unterscheidung verschiedener Gruppen von statischen Radarzielen es ermöglichen, im Belegungsgitter aneinander angrenzende Radarziele voneinander zu unterscheiden. Dies ermöglicht eine bessere Abbildung der Umgebung des Kraftfahrzeugs. Ein Beispiel ist eine mögliche Unterscheidung zwischen einer Leitplanke und einem benachbarten Baum. Ein weiteres Beispiel ist die Unterscheidung zwischen stehenden Fahrzeugen und anderen statischen Radarzielen.

Ein besonderer Vorteil der Zuordnung des Belegungsmusters zu dem Objekt ist, dass bei einer späteren Schätzung des Objekts als überfahrbar das Belegungsmuster aus dem Belegungsgitter entfernt werden kann, da aufgrund der Zuordnung die zu dem Objekt gehörigen Belegungen im Belegungsgitter bekannt sind. Somit kann ein sicheres Entfernen von Belegungswahrscheinlichkeitenn im Belegungsgitter ermöglicht werden. Somit kann, wenn sich im Verlauf einer Annäherung an ein Hindernis das Hindernis als überfahrbar herausstellt, die entsprechende Belegung im Belegungsgitter wieder gelöscht werden. Ein Beispiel ist etwa eine Bahnschiene in einer Straße, etwa eine Straßenbahnschiene oder eine Bahnschiene an einem Bahnübergang. Die Bahnschiene stellt ein statisches Radarziel mit großer Ausdehnung dar, welches aber nach Klassifizierung als überfahrbar in dem Belegungsgitter gelöscht werden kann.

Entsprechend kann auch bei einem Radarziel, das zunächst als statisches Radarziel im Belegungsgitter verzeichnet wurde, und das als ein sich in Bewegung setzendes Fahrzeug erkannt wird, das Belegungsmuster aus dem Belegungsgitter gelöscht werden.

Vorteilhaft ist auch, dass, basierend auf dem Belegungsgitter, eine zusätzliche Schätzung der Ausdehnung von Objekten ermöglicht wird, insbesondere von Objekten, die herkömmlich als Punktziele behandelt wurden. Die ermöglicht eine Verringerung der Rate der falsch-positiven Erkennungen von Hindernissen.

Auch bei größeren Objekten mit einer hohen Anzahl von Radarreflexen im Verlauf der Zeit ist eine zusätzliche Schätzung der Ausdehnung basierend auf dem Belegungsmuster vorteilhaft, da das Belegungsmuster viel einfacher ausgewertet werden kann als die Parameter einer großen Anzahl von Radarreflexen.

Vorteilhaft ist außerdem, dass das Belegungsgitter dennoch eine modellfreie Darstellung des statischen Umfelds des Kraftfahrzeugs ermöglicht. Dadurch ermöglicht das Belegungsgitter vielseitige Anwendungen, etwa zur Schätzung von Leitplanken, oder zur Parklückensuche. Außerdem wird eine Modellierung des Freiraums im Belegungsgitter ermöglicht. Die Modellierung des Freiraums kann zudem durch Entfernen von Belegungsmustern von als überfahrbar erkannten Objekten aktualisiert werden. Somit kann die Zuverlässigkeit eines Belegungsgitters verbessert werden.

Insbesondere kann ein Objekt als statisches Radarziel erkannt werden anhand einer Schätzung einer Absolutgeschwindigkeit von Null, d.h. einer Relativgeschwindigkeit, die der Eigengeschwindigkeit des Kraftfahrzeugs mit entgegengesetztem Vorzeichen entspricht.

Beispielsweise kann zu einem statischen Radarziel das zugeordnete Belegungsmuster gespeichert werden, etwa in Form eines Verzeichnisses der im Belegungsgitter erfolgten Eintragungen, die zu dem Belegungsmuster gehören. Beispielsweise kann zu jeder Gitterzelle des Belegungsgitters, die zu einem Belegungsmuster eines statischen Radarziels gehört, eine Identifikation/Kennung (ID) des statischen Radarziels gespeichert werden, dem das Belegungsmuster zugeordnet ist.

Vorzugsweise wird in einer jeweiligen Gitterzelle des Belegungsgitters eine Belegungswahrscheinlichkeit aufgezeichnet.

Das Belegungsmuster kann eine oder mehrere Gitterzellen im Belegungsgitter umfassen.

Die von dem Objekt reflektierten, empfangenen Radarsignale können in einer oder mehreren Gitterzellen im Belegungsgitter abgebildet werden, wobei die jeweilige Gitterzelle einer jeweiligen Ortungsposition der von dem Objekt reflektierten, empfangenen Radarsignale entspricht.

Vorzugsweise erstreckt sich das Belegungsgitter in wenigstens zwei Dimensionen. Das Belegungsgitter ist vorzugsweise ein zweidimensionales Gitter, entsprechend einem sich horizontal ersteckenden Bereich in der Umgebung des Kraftfahrzeugs.

Beispielsweise kann ein Vergleichen von Radarsignaturen empfangener Radarsignale mit charakteristischen Merkmalen erfolgen, und ein Klassifizieren eines statischen Radarziels aufgrund des Ergebnisses des Vergleichs.

Als charakteristische Merkmale für das Klassifizieren des statischen Radarziels können beispielsweise verwendet werden: Azimut-Winkel, Elevations-Winkel, radiale Entfernung, Relativgeschwindigkeit, und/oder Rückstreueigenschaften, wie z.B. der Radarquerschnitt (radar cross section), sowie Kombinationen mehrere dieser Merkmale.

Bei einem Verfolgen des statischen Radarziels über die Zeit kann beispielsweise ein Aktualisieren der Klassifizierung des statischen Radarziels erfolgen.

Vorteilhafte Weiterbildungen und Ausgestaltungen der Erfindung sind in den Unteransprüchen angegeben.

Vorzugsweise werden mehrere, von unterschiedlichen Ortungspositionen stammende Radarreflexe anhand einer räumlichen Nähe der Ortungspositionen zu einem statischen Radarziel zusammengefasst, wobei das erzeugte Bewegungsmuster im Belegungsgitter mehrere Gitterzellen umfasst, in denen die mehreren Radarreflexe abgebildet werden. Somit können mehrere, dem Radarziel zugeordnete Radarreflexe in jeweiligen Gitterzellen des Belegungsmusters in Form von Belegungswahrscheinlichkeiten aufgezeichnet werden, wobei die jeweiligen Gitterzellen jeweiligen Ortungspositionen der dem Radarziel zugeordneten Radarreflexe entsprechen.

Gegenstand der Erfindung ist außerdem ein Radarsensor für Kraftfahrzeuge, in dem eines der oben beschriebenen Verfahren implementiert ist.

Im Folgenden wird ein Ausführungsbeispiel anhand der Zeichnung näher erläutert.

Es zeigen:
- Fig. 1: eine Prinzipskizze eines Radarsensors, bei dem die Erfindung anwendbar ist;
- Fig. 2: eine schematische Darstellung von Radarreflexen, einem geschätzten Punktziel, sowie einem Belegungsgitter; und
- Fig. 3.: ein Flussdiagramm eines Verfahrens zur Erkennung und Klassifizierung von statischen Radarzielen.

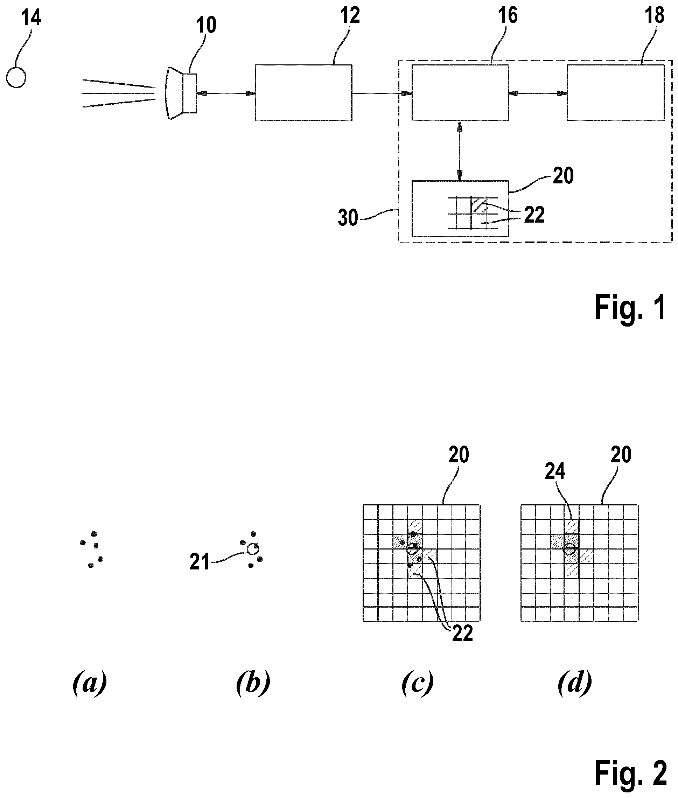

Der in Fig. 1 gezeigte Radarsensor umfasst eine Sensoreinheit 10 mit Sende- und Empfangsantennen, die mit einer Steuer- und Auswerteeinheit 12 verbunden ist. Diese steuert die Sensoreinheit 10 in jeweiligen Messzyklen zur Abstrahlung von Radarsignalen und zum Empfang von von Objekten reflektierten Radarsignalen an. Die empfangenen Radarsignale werden von der Steuer- und Auswerteeinheit 12 ausgewertet, und es werden Parameter einzelner Radarreflexe, d.h. an einem Objekt 14 reflektierter, empfangener Radarsignale, geschätzt. Die geschätzten Parameter der Radarreflexe, sowie weitere Daten der Rohmessungen, die zusammengefasst auch als Radarsignaturen bezeichnet werden können, werden an eine Objekterkennungs- und Verfolgungseinheit 16 ausgegeben. Die Objekterkennungs- und Verfolgungseinheit 16 fasst anhand einer räumlichen Nähe von Ortungspositionen einzelner Radarreflexe bei in geeigneter Weise annähernd übereinstimmenden Relativgeschwindigkeiten die Radarreflexe zusammen und erkennt sie als ein Radarziel. Dies wird auch als Bilden von Clustern oder Clustering bezeichnet. Die erkannten Radarziele werden über die Zeit verfolgt (Objekttracking).

Im Falle eines als statisch erkannten Radarziels, also eines Radarziels, welches einem stehenden Objekt entspricht, nimmt eine mit der Objekterkennungs- und Verfolgungseinheit 16 verbundene Objektklassifizierungseinheit 18 in einem ersten Verarbeitungsweg eine Klassifizierung der erkannten statischen Radarziele anhand von charakteristischen Merkmalen ihrer Radarsignaturen vor. Eine Klassifizierung kann beispielsweise mittels eines deep-learning-Ansatzes erfolgen, etwa mittels eines künstlichen neuronalen Netzwerks. Als Parameter der Radarreflexe können beispielsweise für die Klassifizierung verwendet werden: Azimut-Winkel, Elevations-Winkel, radiale Entfernung, Relativgeschwindigkeit, und Rückstreueigenschaften, wie z.B. der Radarquerschnitt. Weiter können für Klassifizierung Parameter, die auf mehreren Radarreflexen basieren, verwendet werden, wie z.B. Anzahl der Radarreflexe, Anordnung der Reflexe, Muster der Anordnung mit Berücksichtigung der jeweiligen Rückstreueigenschaften der Radarreflexe. Bei der Klassifizierung können beispielsweise unterschieden werden: nicht überfahrbare Objekte (statische Hindernisse) wie stehende Fahrzeuge, Bordsteinkanten, Leitplanken, Schilder, Ampelpfosten, Bäume, und ggf. nicht näher klassifizierte Hindernisse; sowie überfahrbare Objekte.

In einem zweiten Verarbeitungsweg werden gleichzeitig die geschätzten Parameter der Radarreflexe eines erkannten statischen Radarziels in ein in einem Speicher gespeicherten Belegungsgitter 20 eingetragen und über die Zeit akkumuliert.

Dies ist beispielhaft in Fig. 2 veranschaulicht. Das Bewegungsgitter 20 bildet das erkannte statische Umfeld des Kraftfahrzeugs ab.

Fig. 2(a) zeigt Ortungspositionen einzelner Radarreflexe. Fig. 2(b) zeigt ein Radarziel 21 in Form eines geschätzten Punktziels, welches auf den einzelnen Radarreflexen basierend geschätzt wurde. Fig. 2(c) veranschaulicht, wie sich aus den Ortungspositionen der einzelnen Radarreflexe Belegungswahrscheinlichkeiten entsprechender Gitterzellen 22 des Belegungsgitters 20 ergeben. Den Radarreflexen sind entsprechende Gitterzellen zugeordnet, die als "wahrscheinlich belegt" gekennzeichnet sind. Dabei können verschiedene Werte von Belegungswahrscheinlichkeiten unterschieden werden. Unterschiedliche Belegungswahrscheinlichkeiten sind durch unterschiedliche Kennzeichnungen der Gitterzellen 22 dargestellt. Fig. 2(d) zeigt das erhaltene Belegungsmuster 24 im Belegungsgitter 20. Das Belegungsmuster 24 wird somit dadurch erzeugt, dass mehrere, dem Radarziel zugeordnete Radarreflexe in jeweiligen, den Ortungspositionen der Radarreflexe entsprechenden Gitterzellen 22 des Belegungsmusters 24 in Form von Belegungswahrscheinlichkeiten aufgezeichnet werden.

Zusätzlich erfolgt eine Speicherung einer Zuordnung zwischen belegten Gitterzellen 22 des Belegungsmusters 24 und dem betreffenden Radarziel. Beispielsweise kann in jeder betreffenden Gitterzelle 22 die Belegungswahrscheinlichkeit und eine Objekt-Identifikation (ID), die das zugehörige Radarziel identifiziert, gespeichert werden. Alternativ oder zusätzlich kann die Objekterkennungs- und Verfolgungseinheit 16 das Belegungsmuster 24 in Form eines Verzeichnisses der Gitterzellen 22 speichern, welche dem Radarziel zugeordnet sind.

Das Belegungsgitter 20 ist dazu ausgelegt, für mehrere detektierte statische Radarziele die betreffenden Belegungsmuster 24 zu speichern, wobei jeweils die Zuordnungen ebenfalls gespeichert werden.

Die Objekterkennungs- und Verfolgungseinheit 16 ist dazu eingerichtet, für ein Radarziel basierend auf dem zugeordneten Belegungsmuster 24 die Ausdehnung des Radarziels zu schätzen. Die Ausdehnung kann beispielsweise entsprechend den belegten Gitterzellen 22 des Belegungsmusters 24 bestimmt werden. Die so geschätzte Ausdehnung kann als zusätzlicher Parameter des Radarziels in die Klassifizierung des Radarziels durch die Objektklassifizierungseinheit 18 eingehen.

Wenn sich während der Verfolgung eines statischen Radarziels, insbesondere eines Punktziels, herausstellt, dass das Radarziel kein relevantes Hindernis ist, sondern als überfahrbar (re-)klassifiziert wird, so ist die Objekterkennungs- und Verfolgungseinheit 16 dazu eingerichtet, anhand der Zuordnung des Belegungsmusters 24 zu dem statischen Radarziel das zugeordnete Belegungsmuster 24 im Belegungsgitter 20 zu löschen. Ein Beispiel dafür ist ein Objekt in Form eines Gullydeckels. Somit bildet das Belegungsgitter 20 stets nur als potentielle Hindernisse eingestufte statische Radarziele ab, ohne dass im Belegungsgitter 20 Artefakte aufgrund einer aufgehobenen Klassifizierung eines statischen Radarziels als Hindernis zurückbleiben.

Wenn sich während der Verfolgung eines statischen Radarziels herausstellt, dass das Radarziel sich in Bewegung gesetzt hat, so ist die Objekterkennungs- und Verfolgungseinheit 16 dazu eingerichtet, anhand der Zuordnung des Belegungsmusters 24 zu dem Radarziel das zugeordnete Belegungsmuster 24 im Belegungsgitter 20 zu löschen. Somit bildet das Belegungsgitter 20 stets nur als statisch erkannte Radarziele ab, ohne dass im Belegungsgitter 20 Artefakte aufgrund einer aufgehobenen Klassifizierung eines Radarziels als statisches Radarziel zurückbleiben.

Wenn sich während der Verfolgung von zwei oder mehr statischen Radarzielen herausstellt, dass diese zu einem einzigen Objekt gehören, so ist die Objekterkennungs- und Verfolgungseinheit 16 dazu eingerichtet, anhand der Zuordnungen der Belegungsmuster 24 zu den Radarzielen die Belegungsmuster 24 zu einem vereinigten Belegungsmuster 24 eines Radarziels zu verschmelzen.

Die Objektdetektions- und Verfolgungseinheit 16 mit dem Belegungsgitter 20 und die Objektklassifizierungseinheit 18 sind beispielsweise Teil eines Fahrerassistenzsystems 30.

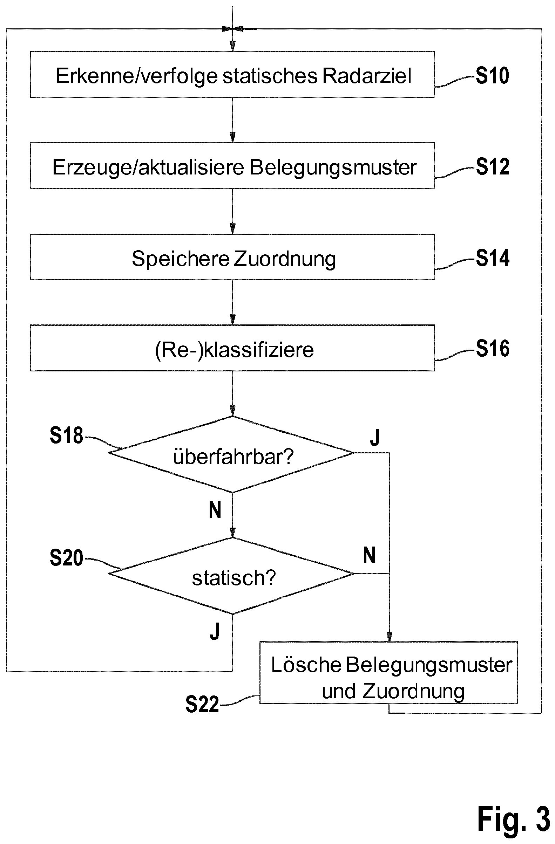

Das in Fig. 3 gezeigte Verfahren kann in dem beschriebenen Radarsensor implementiert sein und wird nachfolgend beschrieben. In einem Schritt S10 erfolgt ein Erkennen zumindest eines Objekts 14 als statisches Radarziel anhand der von dem Objekt 14 reflektierten, empfangenen Radarsignale. In Schritt S12 wird das jeweilige Belegungsmuster 24 in dem Belegungsgitter 20 aufgrund der von dem jeweiligen Objekt 14 reflektierten, empfangenen Radarsignale erzeugt. In Schritt S14 wird eine Zuordnung gespeichert, die dem statischen Radarziel das erzeugte Belegungsmuster 24 zuordnet. In Schritt S16 erfolgt die oben beschriebene Klassifizierung des statischen Radarziels.

Die Klassifizierung (Schritt S16) kann parallel zur Erzeugung des Belegungsmusters (Schritt S14) erfolgen, oder vorher oder anschließend.

In Schritt S18 wird überprüft, ob ein Radarziel als überfahrbar klassifiziert wurde. Falls ja, erfolgt in Schritt S22 ein Löschen des Belegungsmusters sowie der gespeicherten Zuordnung. Das Verfahren wird dann mit dem Schritt S10 des Erkennens und Verfolgens anderer Radarziele fortgesetzt.

Falls nein, wird in Schritt S20 überprüft, ob das Radarziel noch als statisches Radarziel erkannt wird. Falls ja, wird das Verfahren wiederholt, wobei in Schritt S10 das Radarziel weiter verfolgt wird und in Schritt S12 das Belegungsmuster durch Akkumulieren der dem Radarziel zugeordneten Radarreflexe aktualisiert wird. Anderenfalls, wenn also das Radarziel nun als in Bewegung befindlich erkannt wird, erfolgt in Schritt S22 ein Löschen des Belegungsmusters sowie der gespeicherten Zuordnung. Das Verfahren wird dann wiederum mit dem Schritt S10 des Erkennens und Verfolgens anderer Radarziele fortgesetzt.

Die beschriebenen Schritte können jeweils für alle erkannten Radarziele entsprechend ausgeführt werden.

## Patentansprüche

1. Verfahren zur Erkennung und Klassifizierung von statischen Radarzielen mittels eines Radarsensors eines Kraftfahrzeugs, umfassend:
Erkennen (S10) eines Objekts (14) als statisches Radarziel anhand der von dem Objekt (14) reflektierten, empfangenen Radarsignale,
Erzeugen (S12) eines Belegungsmusters (24) in einem Belegungsgitter (20) aufgrund der von dem Objekt (14) reflektierten, empfangenen Radarsignale,,
Speichern (S14) einer Zuordnung, die dem statischen Radarziel das erzeugte Belegungsmuster (24) zuordnet,
**dadurch gekennzeichnet, dass**
nach dem Erzeugen des Belegungsmusters (24) in dem Belegungsgitter (20) und nach dem Speichern der Zuordnung ein Klassifizieren (S16) oder ein Re-klassifizieren (S16) des statischen Radarziels als einer von mehreren Gruppen statischer Radarziele zugehörig anhand charakteristischer Merkmale von Radarsignaturen der von dem entsprechenden Objekt (14) reflektierten, empfangenen Radarsignale erfolgt, wobei die charakteristischen Merkmale umfassen: Azimut-Winkel, Elevations-Winkel, radiale Entfernung, Relativgeschwindigkeit, und/oder Rückstreueigenschaften, oder eine Kombination mehrerer dieser Merkmale.

2. Verfahren nach Anspruch 1, bei dem die mehreren Gruppen statischer Radarziele wenigstens eine Gruppe überfahrbarer Radarziele und eine Gruppe nicht überfahrbarer Radarziele umfassen, und
wobei, wenn ein statisches Radarziel als überfahrbar klassifiziert wird, anhand der Zuordnung des Belegungsmusters (24) zu dem statischen Radarziel das dem statischen Radarziel zugeordnete Belegungsmuster in dem Belegungsgitter (20) gelöscht wird (S18, S22).

3. Verfahren nach Anspruch 1 oder 2, wobei das Verfahren umfasst:
Verfolgen (S10) des statischen Radarziels über die Zeit anhand der von dem entsprechenden Objekt (14) reflektierten, empfangenen Radarsignale mehrerer Messzyklen des Radarsensors,
wobei von dem entsprechenden Objekt (14) reflektierte, empfangene Radarsignale aus mehreren Messzyklen des Radarsensors bei dem Klassifizieren (S16) des statischen Radarziels als einer von mehreren Gruppen statischer Radarziele zugehörig verwendet werden.

4. Verfahren nach einem der vorstehenden Ansprüche, wobei das Verfahren umfasst:
Verfolgen (S10) des statischen Radarziels über die Zeit anhand der von dem entsprechenden Objekt (14) reflektierten, empfangenen Radarsignale mehrerer Messzyklen des Radarsensors,
Fortschreiben (S12) des Belegungsmusters (24), welches dem statischen Radarziel zugeordnet ist, im Belegungsgitter (20), umfassend: Akkumulieren von Belegungswahrscheinlichkeiten aufgrund der von dem entsprechenden Objekt (14) reflektierten, empfangenen Radarsignale der mehreren Messzyklen des Radarsensors in einer oder mehreren Gitterzellen (22) des Belegungsgitters (20).

5. Verfahren nach einem der vorstehenden Ansprüche, bei dem anhand eines Belegungsmusters (24), das einem statischen Radarziel zugeordnet ist, eine Ausdehnung des statischen Radarziels geschätzt wird und die geschätzte Ausdehnung des statischen Radarziels bei dem Klassifizieren (S16) des statischen Radarziels als einer von mehreren Gruppen statischer Radarziele zugehörig verwendet wird.

6. Verfahren nach einem der vorstehenden Ansprüche, bei dem mehrere, von unterschiedlichen Ortungspositionen stammende Radarreflexe anhand einer räumlichen Nähe der Ortungspositionen zu einem statischen Radarziel zusammengefasst werden, wobei das erzeugte Belegungsmuster (24) im Belegungsgitter (20) mehrere Gitterzellen (22) umfasst, in denen die mehreren Radarreflexe abgebildet werden.

7. Radarsensor für Kraftfahrzeuge, aufweisend:
einen Speicher zum Speichern eines Belegungsgitters (20), welches einem Bereich in der Umgebung des Kraftfahrzeugs entspricht,
eine Objekterkennungs- und Verfolgungseinrichtung (16) zum Detektieren und Verfolgen von vom Radarsensor erfassten statischen Radarzielen, und
eine Objektklassifizierungseinheit (18) zum Klassifizieren eines statischen Radarziels als einer von mehreren Gruppen statischer Radarziele zugehörig,
wobei der Radarsensor zur Durchführung des Verfahrens nach einem der Ansprüche 1 bis 6 ausgebildet ist.

## Claims

1. Method for identifying and classifying static radar targets using a radar sensor of a motor vehicle, the method comprising:
identifying (S10) an object (14) as a static radar target based on the received radar signals reflected by the object (14),
generating (S12) an occupancy pattern (24) in an occupancy grid (20) based on the received radar signals reflected by the object (14),
storing (S14) an assignment that assigns the generated occupancy pattern (24) to the static radar target,
**characterized in that**, subsequent to the generation of the occupancy pattern (24) in the occupancy grid (20) and subsequent to the storage of the assignment, classifying (S16) or reclassifying (S16) the static radar target as associated with one of a plurality of groups of static radar targets based on characteristic features of radar signatures of the received radar signals reflected by the corresponding object (14), wherein the characteristic features include: azimuth angle, elevation angle, radial distance, relative velocity and/or backscatter characteristics, or a combination of several of these features.

2. Method according to Claim 1, wherein the plurality of groups of static radar targets comprise at least one group of traversable radar targets and one group of non-traversable radar targets, and
wherein, if a static radar target is classified as traversable, the occupancy pattern assigned to the static radar target in the occupancy grid (20) is deleted (S18, S22) based on the assignment of the occupancy pattern (24) to the static radar target.

3. Method according to Claim 1 or 2, wherein the method comprises:
tracking (S10) the static radar target over time based on the received radar signals of multiple measuring cycles of the radar sensor reflected by the corresponding object (14),
wherein received radar signals from multiple measuring cycles of the radar sensor reflected by the corresponding object (14) are used in the classification (S16) of the static radar target as associated with one of a plurality of groups of static radar targets.

4. Method according to any one of the preceding claims, wherein the method comprises:
tracking (S10) the static radar target over time based on the received radar signals of multiple measuring cycles of the radar sensor reflected by the corresponding object (14),
updating (S12) the occupancy pattern (24), which is assigned to the static radar target, in the occupancy grid (20), comprising: accumulating occupancy probabilities in one or more grid cells (22) of the occupancy grid (20) based on the received radar signals of the multiple measuring cycles of the radar sensor reflected by the corresponding object (14).

5. Method according to any one of the preceding claims, wherein an expansion of the static radar target is estimated based on an occupancy pattern (24), which is assigned to a static radar target, and the estimated expansion of the static radar target is used in the classification (S16) of the static radar target as associated with one of a plurality of groups of static radar targets.

6. Method according to any one of the preceding claims, wherein a plurality of radar reflexes originating from different locating positions are combined based on a spatial proximity of the locating positions to a static radar target, wherein the generated occupancy pattern (24) in the occupancy grid (20) comprises a plurality of grid cells (22) in which the plurality of radar reflexes are imaged.

7. Radar sensor for motor vehicles, comprising:
a memory for storing an occupancy grid (20) corresponding to an area in the vicinity of the motor vehicle,
an object identification and tracking device (16) for detecting and tracking static radar targets sensed by the radar sensor, and
an object classification unit (18) for classifying a static radar target as associated with one of a plurality of groups of static radar targets,
wherein the radar sensor is designed to carry out the method according to any one of Claims 1 to 6.

## Revendications

1. Procédé de détection et de classification de cibles radar statiques au moyen d'un capteur radar d'un véhicule automobile, comprenant :
le fait (S10) de détecter un objet (14) en tant que cible radar statique sur la base de signaux radar reçus réfléchis par l'objet (14),
le fait (S12) de générer un modèle d'occupation (24) dans une grille d'occupation (20) sur la base des signaux radar reçus réfléchis par l'objet (14),
le fait (S14) d'enregistrer une affectation qui affecte le modèle d'occupation généré (24) à la cible radar statique,
**caractérisé en ce que**, après la génération du modèle d'occupation (24) dans la grille d'occupation (20) et après l'enregistrement de l'affectation, une classification (S16) ou une re-classification (S16) de la cible radar statique en tant que faisant partie d'un groupe de cibles radar statiques est effectuée sur la base d'éléments caractéristiques des signatures radar des signaux radar réfléchis par l'objet correspondant (14), et reçus, les éléments caractéristiques comprenant : l'angle d'azimut, l'angle d'élévation, la distance radiale, la vitesse relative et/ou les propriétés de rétrodiffusion, ou une combinaison de plusieurs de ces caractéristiques.

2. Procédé selon la revendication 1, dans lequel la pluralité de groupes de cibles radar statiques comprend au moins un groupe de cibles radar franchissables et un groupe de cibles radar non franchissables, et
lorsqu'une cible radar statique est classée comme étant franchissable, le modèle d'occupation associé à la cible radar statique est supprimé de la grille d'occupation (20) (S18, S22) sur la base de l'affectation du modèle d'occupation (24) à la cible radar statique.

3. Procédé selon la revendication 1 ou la revendication 2, le procédé comprenant :
le fait (S10) de suivre la cible radar statique au cours du temps sur la base de signaux radar reçus, réfléchis par l'objet correspondant (14), de plusieurs cycles de mesure du capteur radar,
les signaux radar reçus, réfléchis par l'objet correspondant (14), à partir d'une pluralité de cycles de mesure du capteur radar étant utilisés pour classer (S16) la cible radar statique comme appartenant à un groupe de la pluralité de groupes de cibles radar statiques.

4. Procédé selon l'une des revendications précédentes, le procédé comprenant :
le fait (S10) de suivre la cible radar statique au cours du temps sur la base de signaux radar reçus, réfléchis par l'objet correspondant (14), de plusieurs cycles de mesure du capteur radar,
le fait (S12) d'actualiser le modèle d'occupation (24) associé à la cible radar statique dans la grille d'occupation (20), comprenant : le fait d'accumuler des probabilités d'occupation sur la base des signaux radar reçus, réfléchis par l'objet correspondant (14), de la pluralité de cycles de mesure du capteur radar dans une ou plusieurs cellules de grille (22) de la grille d'occupation (20).

5. Procédé selon l'une des revendications précédentes, dans lequel une extension de la cible radar statique est estimée sur la base d'un modèle d'occupation (24) qui est associé à une cible radar statique, et l'extension estimée de la cible radar statique est utilisée pour classer (S16) la cible radar statique comme appartenant à un groupe d'une pluralité de groupes de cibles radar statiques.

6. Procédé selon l'une des revendications précédentes, dans lequel une pluralité de réflexions radar provenant de différentes positions de localisation sont regroupées en une cible radar statique sur la base d'une proximité spatiale des positions de localisation, le modèle d'occupation (24) généré dans la grille d'occupation (20) comprenant plusieurs cellules de grille (22) dans lesquelles les différentes réflexions radar sont représentées.

7. Capteur radar pour véhicules automobiles, comprenant :
une mémoire pour stocker une grille d'occupation (20) qui correspond à une zone dans l'environnement du véhicule automobile,
un dispositif de détection et de poursuite d'objets (16) pour détecter et poursuivre des cibles radar statiques détectées par le capteur radar, et
une unité (18) de classification d'objets pour classer une cible radar statique comme appartenant à un groupe d'une pluralité de groupes de cibles radar statiques,
le capteur radar étant conçu pour mettre en œuvre le procédé selon l'une des revendications 1 à 6.
